# EUROPEAN PATENT APPLICATION

(11) **EP 4 682 755 A1**
(43) Date of publication of application: **21.01.2026**
(21) Application number: 24189167.0
(22) Date of filing: 17.07.2024
(51) Int. Cl.: G06F 30/398, G06F 119/18

(54) **METHOD FOR DESIGN RULE CHECK**

(71) Applicant: Imec VZW, 3001 Leuven (BE)
(72) Inventor: CHANG, Hsinlan, 3000 Leuven (BE); DRISSI, Moulay Youssef, 1000 Bruxelles (BE); SHERAZI, Syed Muhammad Yasser, 3360 Lovenjoel (BE); KIM, Ryan Ryoung han, 3060 Bertem (BE)
(74) Representative: Lind Edlund Kenamets Intellectual Property AB

(57) **Abstract**

In an aspect there is provided a computer-implemented method for DRC of a layout of an integrated circuit design, the layout comprising a combination of Manhattan features and non-Manhattan features, the method comprising:
obtaining the layout;
processing the layout to identify Manhattan features and non-Manhattan features in the layout;
obtaining a first rule set of one or more design rules exclusively pertaining to Manhattan features;
performing a first DRC by applying the first rule set exclusively to the identified Manhattan features in the layout;
obtaining a second rule set of one or more design rules pertaining to at least non-Manhattan features; and
performing a second DRC by applying the second rule set to at least the identified non-Manhattan features in the layout.

## Description

### TECHNICAL FIELD

The present invention generally relates to a computer-implemented method for design rule check of a layout of an integrated circuit design.

### BACKGROUND

An integrated circuit (IC) device comprises a plurality of layers or levels stacked on top of each other over a substrate, such as an active layer arranged on and/or in the substrate and an interconnect structure comprising conductive layers (e.g., metal layers) of vertical interconnects (e.g., metal vias) and horizontal interconnects (e.g., metal lines) for routing power and signals within the IC device.

The layout of the respective layers of an IC device is typically designed in a computer-aided design flow, e.g., using electronic design automation (EDA) tools. To ensure that the design intent can be realized (i.e., fabricated at a semiconductor foundry), the design flow includes checking each layout against multiple design rules. This process is known as design rule check or design rule checking (DRC). Examples of design rules include checking that the metal lines do not undercut certain minimum critical dimension (CDs), such as a minimum line width and a minimum metal-to-metal line spacing. The specific limits set by the design rules, such as the minimum CDs, may vary between different foundries and the constraints (e.g., of the lithography) of the fabrication techniques to be used.

### SUMMARY

The metal lines of an IC device are conventionally routed in a so-called Manhattan routing scheme of first and second mutually transverse Manhattan directions. Conventional DRC accordingly includes design rules adapted to metal lines extending in either the first Manhattan direction or the second Manhattan direction.

To improve device properties, such as routing efficiency and circuit density, horizontal interconnects with free-form design, such as metal lines with curvilinear shapes, are considered for advanced technology nodes.

However, as realized by the inventors, since typical DRC assumes Manhattan-type routing schemes, introducing such non-Manhattan shapes into the circuit layouts may introduce issues during DRC. For instance, performing a typical DRC on a layout comprising a combination of Manhattan and non-Manhattan shapes using design rules adapted to Manhattan shapes may overlook feature metrics in the layout which may result in challenges during device fabrication. Additionally, and potentially to a greater extent, the DRC may result in false errors, meaning that the DRC may produce errors for parts of the layout which are realizable, i.e., within the capacity of, the fabrication techniques to be used. Given the very large number of circuit features comprised in an interconnect layer of state-of-the-art IC devices, manually checking each such false error is not feasible.

Therefore, it is an object of the present invention to facilitate DRC of a layout of an IC design comprising a combination of Manhattan features and non-Manhattan features. Further and alternative objects may be appreciated from the following.

Hence, according to a first aspect of the present invention, there is provided a computer-implemented method for DRC of a layout of an integrated circuit design, the layout comprising a combination of Manhattan features and non-Manhattan features, the method comprising:
obtaining the layout;
processing the layout to identify Manhattan features and non-Manhattan features in the layout;
obtaining a first rule set of one or more design rules exclusively pertaining to Manhattan features;
performing a first DRC by applying the first rule set exclusively to the identified Manhattan features in the layout;
obtaining a second rule set of one or more design rules pertaining to at least non-Manhattan features; and
performing a second DRC by applying the second rule set to at least the identified non-Manhattan features in the layout.

The method of the first aspect enables DRC to be conducted efficiently on a layout comprising a combination of Manhattan features and non-Manhattan features (such as curvilinear features).

In particular, the false errors that may result from applying design rules for Manhattan features to non-Manhattan features may be avoided, or at least mitigated, such that DRC on a combined Manhattan and non-Manhattan feature layout may be conducted in a rational manner.

This is enabled by processing the layout to identify the Manhattan and non-Manhattan features in the layout, or in other words separate or decompose the layout into its constituent Manhattan and non-Manhattan features. This in turn enables the first rule set of one or more design rules pertaining exclusively to Manhattan features, and the second rule set of one or more design rules pertaining to at least non-Manhattan features, to be individually applied to the identified Manhattan features and non-Manhattan features, respectively.

The one or more rules of the first rule set pertain(s) exclusively to Manhattan features. The first rule set is thus defined as a Manhattan feature-exclusive DRC rule set, only considering Manhattan features and excluding non-Manhattan features from consideration. Accordingly, in the first DRC, the first rule set is applied exclusively to the identified Manhattan features in the layout, ignoring each identified non-Manhattan feature.

The one or more rules of the second rule set pertain(s) to at least non-Manhattan features. The second rule set is thus defined as an at least non-Manhattan feature-encompassing DRC rule set, considering at least non-Manhattan features, and optionally a relationship between non-Manhattan features and Manhattan features. Accordingly, in the second DRC, the second rule set is applied at least to the identified non-Manhattan features in the layout, and optionally a relationship or relationships between the identified non-Manhattan features and the identified Manhattan features.

A reason for defining the second rule set to optionally consider both non-Manhattan features and Manhattan features is that the second DRC hence may apply one or more specifically adapted DRC rules to relationships between non-Manhattan and Manhattan features, such as a minimum spacing of (i.e., between) non-Manhattan and Manhattan features.

The first and second DRCs may thus treat features in the Manhattan and non-Manhattan feature categories in respective and purposefully adapted manners. This additionally enables a more precise control over the design of the respective feature categories in relation to the specific constraints (e.g., lithography constraints) of the fabrication processes intended for the layout.

In some embodiments, the first rule set comprises a first subset of design rules related to a first type of Manhattan features extending in the first Manhattan direction, and a second subset of design rules related to a second type of Manhattan features extending in the second Manhattan direction, wherein in performing the first DRC, the first subset of design rules is applied to Manhattan features of the first type identified in the layout, and the second subset of design rules is applied to Manhattan features of the second type identified in the layout.

This allows Manhattan features extending in the respective Manhattan directions to be evaluated using respective and different design rules. This may confer a more precise control of the DRC where the different Manhattan directions are associated with different constraints during fabrication.

For instance, the first Manhattan direction may be a preferred direction.

Current lithographic scanners often use anisotropic sources (such as dipole-like sources in deep ultraviolet (DUV), extreme ultraviolet (EUV) and high-NA lithographic scanners). Using such sources is typically associated with selecting one direction in the layout, such as the first Manhattan direction, as a preferred or privileged direction, meaning that Manhattan features extending in the first direction (i.e., the first type of Manhattan features) may be fabricated under tighter constraints than Manhattan features extending in the (non-preferred) second direction (i.e., the second type of Manhattan features).

This means that the first subset of design rules may be based on (i.e., associated with) a first CD (or a first set of CDs) and that the second subset of design rules may be based on a second CD greater than the first CD (or a second set of CDs, each being greater than a corresponding CD of the first set of CDs).

As may be appreciated, the first CD(s) is / are measured along the second Manhattan direction while the second CD(s) is / are measured along the first Manhattan direction.

For example, the fact that the first Manhattan direction is the preferred direction implies that a minimum feature-to-feature spacing (i.e., the minimum line-to-line spacing) of the first type of Manhattan features, as seen along the second Manhattan direction, is smaller than a minimum feature-to-feature spacing of the second type of Manhattan features, as seen along the first Manhattan direction.

Correspondingly, a minimum line feature width (i.e., minimum line width) of the first type of Manhattan features as seen along the second Manhattan direction is smaller than a minimum feature-width of the second type of Manhattan features as seen along the first Manhattan direction.

It is contemplated that the merits of the present method are especially pronounced when applied to a layout involving a preferred direction. This since without an individual and specifically adapted handling of Manhattan and non-Manhattan features, designing a layout comprising a combination of Manhattan features and non-Manhattan features, while making use of the tighter CD(s) for the preferred first Manhattan direction, would result in an especially great number of false errors occasioned by the non-Manhattan features. Conversely, this means that the individual evaluation of Manhattan and non-Manhattan features provided by the present method, allows the tighter lithographic constraints and scaled CD(s) for the preferred first orientation to be fully utilized in a layout comprising a combination of Manhattan features and non-Manhattan features, without resulting in an excessive number of false errors during DRC.

In some embodiments, the first rule set comprises a first minimum Manhattan feature spacing design rule defining a minimum feature spacing between spaced apart Manhattan features, and
the second rule set comprises a first minimum non-Manhattan feature spacing design rule defining a minimum feature spacing between spaced apart non-Manhattan features, and/or a second minimum non-Manhattan feature spacing design rule defining a minimum feature spacing between spaced apart non-Manhattan and Manhattan features,
wherein in performing the first DRC, the first minimum Manhattan feature spacing design rule is applied to spaced apart Manhattan features identified in the layout, and
wherein in performing the second DRC, the first minimum non-Manhattan feature spacing design rule is applied to spaced apart non-Manhattan features and/or the second minimum non-Manhattan feature spacing design rule is applied to spaced apart non-Manhattan and Manhattan features identified in the layout.

Hence, the first and second DRCs may apply different and respective minimum feature spacing design rules to identified spaced apart Manhattan features and identified and spaced apart non-Manhattan features or spaced apart non-Manhattan and Manhattan features rules. The term "spaced apart" is here used to denote that the minimum feature spacing design rules are applied to respective non-adjoining features. That is, the first minimum Manhattan feature spacing is applied to non-adjoining Manhattan features, while the first minimum non-Manhattan feature spacing design rule is applied to non-adjoining non-Manhattan features, and/or the second minimum non-Manhattan feature spacing design rule is applied to non-adjoining non-Manhattan and Manhattan features. This since, naturally, applying a minimum feature spacing design rule to a pair of features which are intended to be adjoining is not meaningful.

In embodiments where the first rule set comprises the first subset of design rules related to the first type of Manhattan features, and the second subset of design rules related to the second type of Manhattan features, the first minimum feature spacing design rule may be comprised in the first subset of design rules of the first rule set and define a minimum feature spacing between Manhattan features spaced apart along the second Manhattan direction. Further, the second subset of design rules of the first rule set may comprise a second minimum Manhattan feature spacing design rule defining a minimum feature spacing between Manhattan features spaced apart along the first Manhattan direction. In performing the first DRC, the first minimum Manhattan feature spacing design rule may be applied to spaced apart Manhattan features of the first type, and the second minimum Manhattan feature spacing design rule may be applied to spaced apart Manhattan features of the second type.

Hence, the minimum spacing of Manhattan features of the first and second types may be checked along each of the first and second Manhattan directions.

As may be understood in view of the preceding discussion, where the first Manhattan direction is the preferred direction, the minimum feature spacing of the first minimum Manhattan feature spacing design rule may be smaller than the minimum feature spacing of the second minimum Manhattan feature spacing design rule.

In some embodiments, the minimum feature spacing(s) of the first and/or second non-Manhattan feature spacing design rules is different from the minimum feature spacings of the first and second minimum Manhattan feature spacing design rules. Different minimum spacings may thus be applied to feature spacings involving a non-Manhattan feature and feature spacings only involving Manhattan features.

As may be understood in view of the preceding discussion, where the first Manhattan direction is the preferred direction, the minimum feature spacing(s) of the first and/or second non-Manhattan feature spacing design rules may be greater than the minimum feature spacing of the first minimum Manhattan feature spacing design rule.

In some embodiments, the first rule set additionally or alternatively comprises a first minimum Manhattan feature width design rule defining a minimum feature width of Manhattan features, and
the second rule set comprises a minimum non-Manhattan feature width design rule defining a minimum feature width of non-Manhattan features,
wherein in performing the first DRC, the first minimum Manhattan feature width design rule is applied to Manhattan features identified in the layout, and
wherein in performing the second DRC, the minimum non-Manhattan feature width design rule is applied to non-Manhattan features identified in the layout.

The above discussion concerning the first minimum Manhattan and non-Manhattan feature spacing design rules applies correspondingly to the first Manhattan and non-Manhattan minimum feature width design rules, with the difference that the minimum non-Manhattan feature width design rule may be applied exclusively to non-Manhattan features identified in the layout, since feature width is a per-feature-metric.

In embodiments where the first rule set comprises the first subset of design rules related to the first type of Manhattan features, and the second subset of design rules related to the second type of Manhattan features, the first minimum Manhattan feature width design rule may be comprised in the first subset of design rules of the first rule set and define the minimum feature width of Manhattan features of the first type. Further, the second subset of design rules of the first rule set may comprise a second minimum Manhattan feature width design rule defining a minimum feature width of Manhattan features of the second type. In performing the first DRC, the first minimum Manhattan feature width design rule may be applied to Manhattan features of the first type, and the second minimum Manhattan feature width design rule may be applied to Manhattan features of the second type.

Hence, Manhattan features of the first type, extending in the first direction, and Manhattan features of the second type, extending in the second direction, may be checked against different minimum feature width.

As may be understood in view of the preceding discussion, where the first Manhattan direction is the preferred direction, the first minimum feature width may be smaller than the third minimum feature width.

In some embodiments, the second minimum feature width is different from the first minimum feature width and the third minimum feature width. Different minimum widths may thus be applied to feature widths of non-Manhattan features and Manhattan features.

As may be understood in view of the preceding discussion, where the first Manhattan direction is the preferred direction, the minimum feature width of the minimum non-Manhattan feature width design rule may be greater than the minimum feature width of the first minimum Manhattan feature width design rule.

In some embodiments, the processing comprises first identifying Manhattan features in the layout and subsequently identifying non-Manhattan features in the layout as features in the layout not being Manhattan features.

This enables the layout to be decomposed into its constituent Manhattan and non-Manhattan features in a reliable and efficient manner. Manhattan features may be identified as rectangle-shaped features in the layout oriented in either the first or second Manhattan direction. The non-Manhattan features may in turn be identified by subtracting the identified Manhattan features from the full set of features comprised in the layout. This reduces the need for complex and potentially computationally expensive geometric pattern recognition algorithms.

In some embodiments, the processing further comprises identifying, among the non-Manhattan features, features of a first non-Manhattan type and a second non-Manhattan type, wherein features of the second non-Manhattan type are of a round (line) tip type and features of the first non-Manhattan type are features not identified as the second non-Manhattan type, and
wherein the second rule set comprises at least one (first) non-Manhattan design rule related to the first type of non-Manhattan features but not the second type of non-Manhattan features, and at least one (second) non-Manhattan design rule related to the second type of non-Manhattan features but not the first type of non-Manhattan feature.

The non-Manhattan features may hence be further sub-classified into sub-categories of non-Manhattan features, including the first type of non-Manhattan features and the second type of non-Manhattan features. The sub-categories may accordingly be subjected to respective subsets of design rules comprised in the second rule set.

That is, in performing the second DRC, the at least one first non-Manhattan design rule may be applied to the first type of non-Manhattan features but not the second type of non-Manhattan features, and the at least one second non-Manhattan design rule may be applied to the second type of non-Manhattan features but not the first type of non-Manhattan features.

A non-Manhattan feature of a round tip type may be a rounded line tip of / adjoining a Manhattan feature (of the first or second Manhattan type).

A computationally efficient approach for identifying non-Manhattan features of the first and second type is to first identify non-Manhattan features of the second type (round tip type) as features among the non-Manhattan features having an area (footprint) which is smaller than a threshold area, and subsequently identifying the non-Manhattan features of the second type as the remaining non-Manhattan features in the layout not being the second type of non-Manhattan features. Thereby, the first and second types of non-Manhattan features may be identified by a simple area threshold test of the non-Manhattan features, followed by a subtraction of the identified non-Manhattan features of the second type from the full set of non-Manhattan features comprised in the layout.

In some embodiments, the at least one first non-Manhattan design rule related to the first type of non-Manhattan features but not the second type of non-Manhattan features comprises the minimum non-Manhattan feature width design rule, and
wherein the at least one second non-Manhattan design rule related to the second type of non-Manhattan features but not the first type of non-Manhattan feature comprises a curvature metric.

Thereby, in the second DRC, the minimum non-Manhattan feature width design rule may be selectively applied to non-Manhattan features of the first type (curvilinear features), while ignoring/omitting any second/round tip type features from the check. Since a rounded tip lacks any single unambiguous width, and further are likely to trigger false DRC errors if subjected to a conventional minimum line width design rule, it may be effective to exclude any identified round tips from a minimum feature width check. Meanwhile, the curvature metric may be selectively applied to non-Manhattan features of the second type (round tips).

In some embodiments, the processing further comprises identifying via locations in the layout and non-Manhattan features at least partly enclosing each identified via location, wherein the second rule set further comprises a minimum enclosure rule defining a minimum via enclosure between a via location and a non-Manhattan feature, and wherein in performing the second DRC, the minimum enclosure rule is applied to each identified via location and the identified non-Manhattan feature enclosing the identified via location.

Since non-Manhattan features deviate from the rectangular Manhattan shape, applying a conventional minimum enclosure rule to a via location and a non-Manhattan feature enclosing the via location may result in false DRC errors.

In some embodiments, the method further comprises identifying in the layout composite features comprising adjoining Manhattan and non-Manhattan features,
wherein the second rule set comprises at least one design rule related to composite features comprising adjoining Manhattan and non-Manhattan features, and
wherein in performing the second DRC, the at least one design rule related to composite features is applied to the composite features identified in the layout.

Hence, one or more further purposefully adapted design rules may be applied specifically to composite Manhattan-and-non-Manhattan features. This may in particular be useful where the decomposition of the composite features into its constituent Manhattan and a non-Manhattan feature parts may result in an isolated non-Manhattan feature with a portion with a non-manufacturable shape, such as pointy edge portion. Applying the one or more design rules to such composite features as a whole may avoid false DRC errors which otherwise could result had the non-Manhattan feature been considered in isolation from the adjoining Manhattan feature.

According to a second computer program code portions configured to perform a method for DRC of a layout of an integrated circuit design, in accordance with any one of the preceding claims, when executed by a processing device.

The second aspect feature the same or equivalent benefits as the first aspect. Any features described in relation to the first aspect, may have corresponding features in the second aspect, and vice versa.

### BRIEF DESCRIPTION OF THE DRAWINGS

These and other aspects and embodiments of the present invention will now be described in more detail, with reference to the appended drawings.
Fig. 1a-b schematically show an example layout of an IC design (Fig. 1a) and an enlargement of a portion of the layout (Fig. 1b)
Fig. 2 is a flow chart of a method for DRC of a layout of an IC design, comprising a combination of Manhattan features and non-Manhattan features.
Fig. 3 shows Manhattan features identified in the layout of Fig. 1a.
Fig. 4 shows non-Manhattan features identified in the layout of Fig. 1a.
Fig. 5a-b show examples of a minimum enclosure rule applied with respect to a non-Manhattan feature.
Fig. 6 shows a schematic block diagram of a computing device in which the method of Fig. 2 may be implemented.

### DETAILED DESCRIPTION

In the present disclosure, the term "Manhattan feature" (interchangeably, a feature of a Manhattan shape, type or category) means a line-shaped circuit feature that extends in either a first Manhattan direction of the layout ("first type of Manhattan feature" or "feature of the first Manhattan type") or a second Manhattan direction of the layout ("second type of Manhattan feature" or "feature of the second Manhattan type"). The first and second Manhattan directions are mutually transverse directions. The first and second Manhattan directions may interchangeably be denoted first and second horizontal directions, as they are parallel to a major plane / major plane of extension of the layout. The first and second Manhattan directions may typically be parallel to respective portions of a boundary of the layout of the IC design.

In the present disclosure, the term "non-Manhattan feature" (interchangeably, a feature of a non-Manhattan shape, type or category) means a circuit feature that is not a Manhattan feature, i.e., a circuit feature that extends, or has a perimeter that extends, at an angle with respect to each of the first and second Manhattan directions. The non-Manhattan features may further be sub-classified into non-Manhattan features of a first type and a second type. The second type of non-Manhattan features herein refer to round(ed) tips of lines, typically Manhattan lines (the first or second Manhattan type). The first type of non-Manhattan features are herein considered as non-Manhattan features not being of the second type. Examples of non-Manhattan features of the first type include a line-shaped circuit feature extending diagonally with respect to the first and second Manhattan directions, a curvilinear circuit feature (i.e., a line-shaped circuit feature extending along, or having at least one edge extending along, a curvilinear path). The first type of non-Manhattan features may in the following for conciseness and simplicity be referred to as "curvilinear features". As is apparent from the preceding examples, it is however to be noted that the first type of non-Manhattan features is not strictly limited to specifically "curvilinear" features, but may more generally also comprise straight-line diagonal features and square-shaped features with edges oriented at an angle relative the first and second Manhattan directions.

Each of a line-shaped Manhattan feature and a line-shaped non-Manhattan feature may be a horizontal interconnect in the form of a metal line or a metal line portion. The metal line (portion) may be a metal line (portion) of a metal layer of an interconnect structure of the IC design. However, other types of line-shaped and non-line-shaped Manhattan and non-Manhattan circuit features are also possible such as local interconnects, (e.g., local interconnects of a local interconnect layer), a conductive non-metal feature, a semiconductor feature (e.g., a semiconductor fin, of an active layer of the IC design), a gate line (e.g., of a gate pattern of a gate layer of the IC design, a dielectric feature or a dummy feature (e.g., of a dielectric or dummy feature pattern).

The Manhattan features and the non-Manhattan features may be discrete or non-adjoining features of the layout. However, the layout may additionally comprise composite features comprising adjoining Manhattan and non-Manhattan features. Identifying Manhattan features and non-Manhattan features in the layout allows Manhattan features and non-Manhattan features of any such composite feature in the layout to be separated to enable the first and second DRCs.

The act of "applying" a rule set to a set of features (such as the Manhattan features) during DRC, as referred to herein, may comprise checking, for each rule of the rule set, that (where the rule relates to individual features, such as a minimum feature width) each feature of the set of features complies with (i.e., meets) the rule (e.g., each individual feature has a feature width meeting or exceeding the minimum feature width defined by the rule), or that (where the rule relates to a relationship between features, such as a minimum feature spacing) the set of features are arranged relative each other in compliance with the rule (e.g., the features of the set of features are arranged with a spacing meeting or exceeding the minimum feature spacing defined by the rule).

It is further to be noted that terms such as "first" and "second" etc. with reference to elements (e.g. layers or other structures) or, as the case may be, method steps are used herein only as labels to facilitate distinguishing between different elements, and need not necessarily imply that such elements or method steps are arranged or performed in that particular order, unless stated otherwise.

The drawings are only schematic and the relative dimensions of illustrated elements, such as layers or other structures, may be exaggerated and not drawn to scale. Rather the dimensions may be adapted for illustrational clarity and to facilitate understanding. When present in the figures, the indicated axes X and Y point in the first Manhattan direction and the second Manhattan direction, respectively.

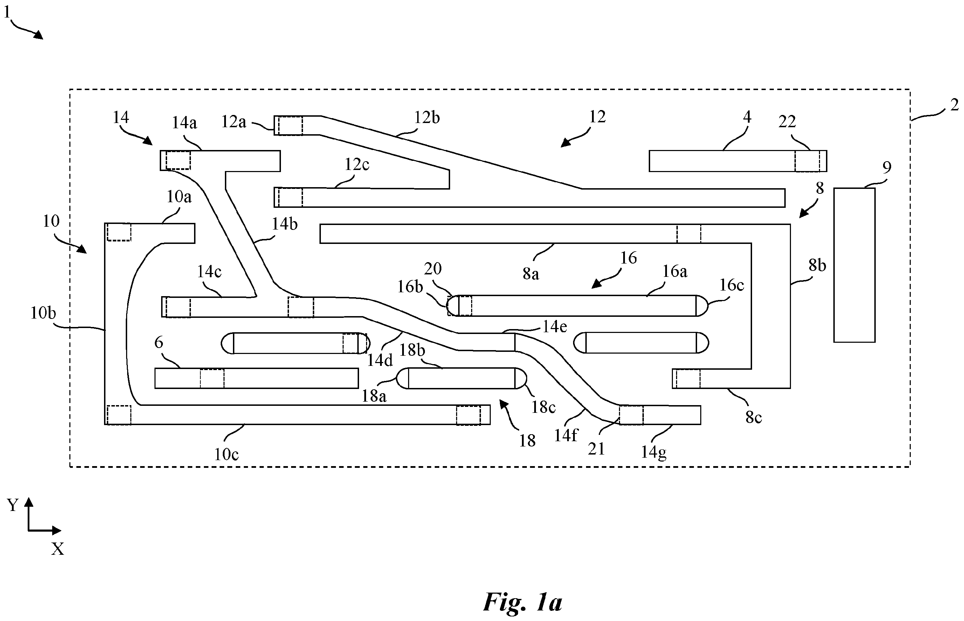

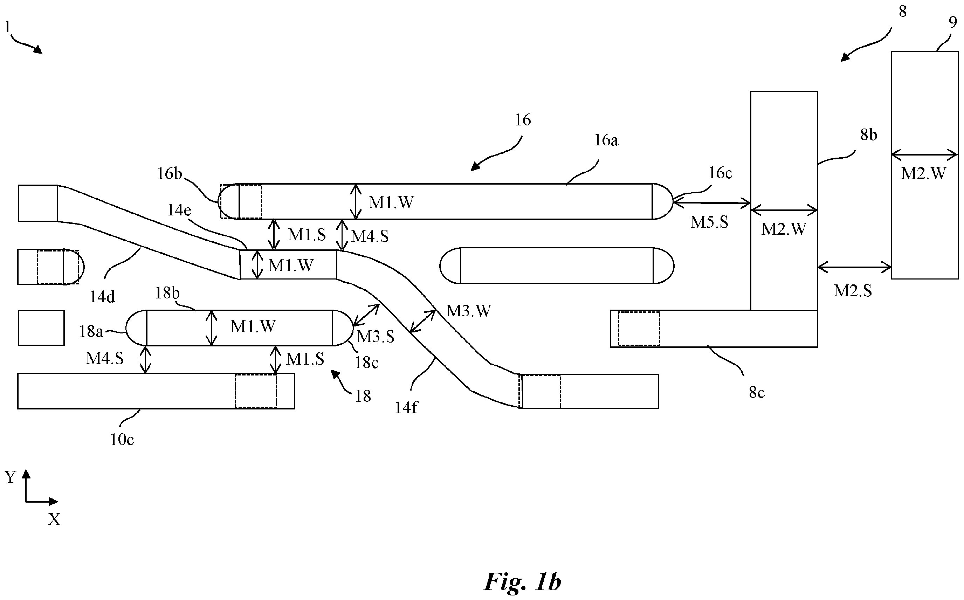

Fig. 1a schematically show an example layout 1 of an IC design. Fig. 1b shows an enlargement of a representative portion of the layout 1. The layout 1 may also be referred to as a floorplan. The dashed line boundary 2 indicates a boundary of the layout or floorplan 1. As may be appreciated, Fig. 1a may illustrate only a small portion of an actual layout, which typically may comprise a much larger number of features.

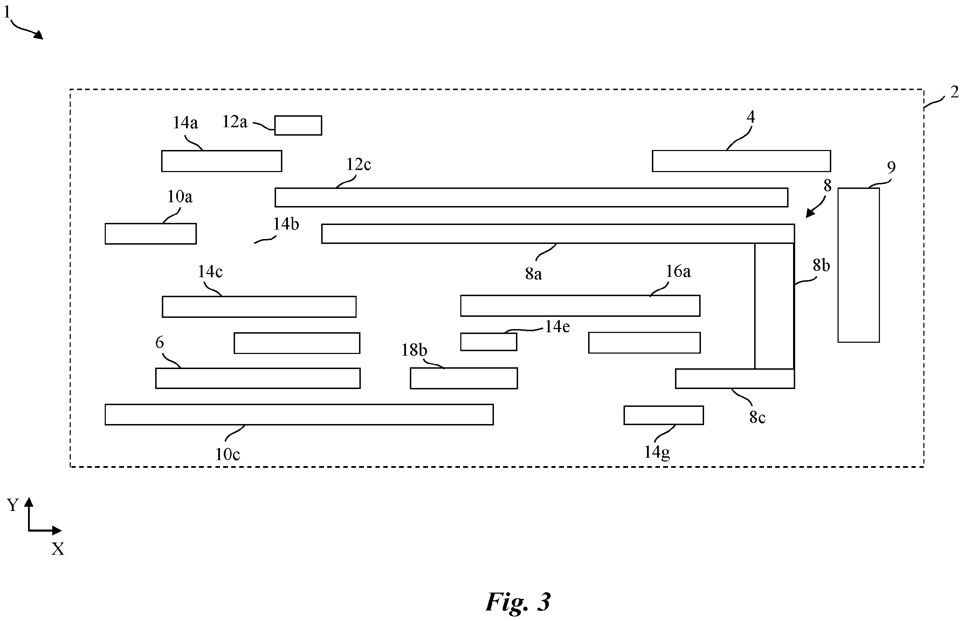

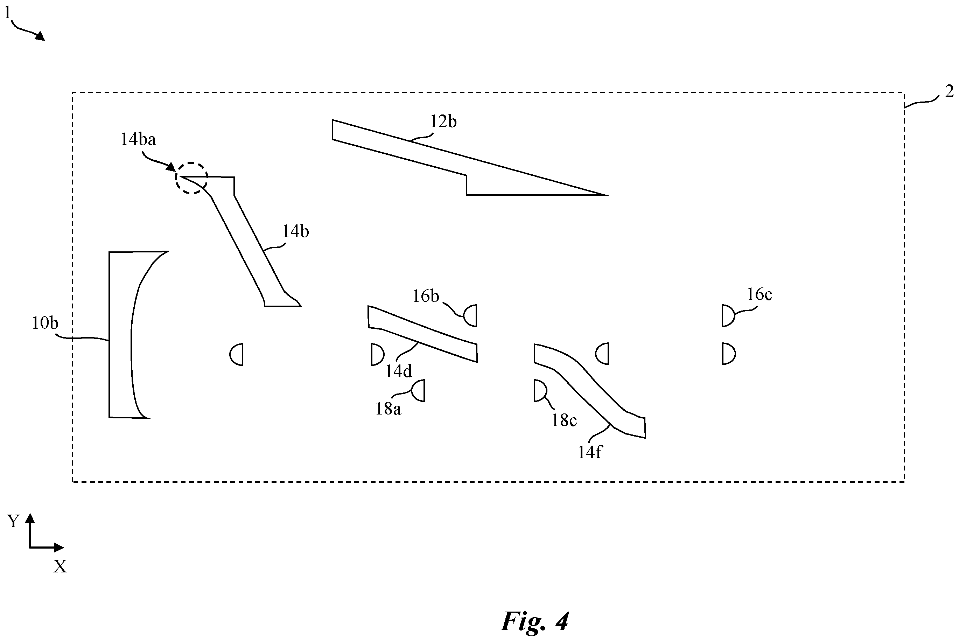

The layout 1 comprises a pattern of features comprising a combination of Manhattan features and non-Manhattan features. The Manhattan features include for instance features 4, 6, 8a, 8b, 8c, 9, 10a, 10c, 12a, 12c, 14a, 14c, 14e, 14g, 16a and 18b. The non-Manhattan features include for instance features 10b, 12b, 14b, 14d, 14f, 16b, 16c, 18a and 18c. The Manhattan features and non-Manhattan features are also separately shown in Fig. 3 and 4, showing, respectively, the layout 1 partitioned into its constituent Manhattan and non-Manhattan features.

In the illustrated example, the Manhattan and non-Manhattan features of the layout 1 are configured to define horizontal interconnects, more specifically metal lines, of a metal routing layer (e.g., "MINT", "M0", "M1", "M2", etc.). However as indicated above, the following disclosure may be applied correspondingly to any of the other above-mentioned configurations of Manhattan and non-Manhattan features. For instance, the method may be applied to a layout comprising Manhattan features and non-Manhattan features for defining local interconnects (e.g., source/drain contacts) of a bottom-most local interconnect layer (e.g., "M0A").

Each Manhattan feature 4, 6, 8a, 8b, 8c, 9, 10a, 10c, 12a, 12c, 14a, 14c, 14e, 14g, 16a and 18b has the shape of a metal line or a metal line portion extending in either the first Manhattan direction X or the second Manhattan direction Y.

In the illustrated example, the layout 1 comprises a two Manhattan features 8b and 9 extending in the second Manhattan direction Y (and thus representing Manhattan features of the second type). All other Manhattan features extend in the first Manhattan direction X (and thus represent Manhattan features of the first type). However, this is merely an example and a layout may of course comprise any number of Manhattan features of the first and second type, respectively.

Each non-Manhattan feature 10b, 12b, 14b, 14d, 14f, 16b, 16c, 18a and 18c has a non-rectangular shape and/or extends diagonally with respect to the first and second Manhattan directions X, Y. As will be further discussed below, some of the non-Manhattan features (e.g., 10b, 12b, 14b, 14d) are line-shaped and have a curvilinear shape and/or diagonal orientation, while some non-Manhattan features (e.g., 16b, 16c, 18a, 18c) form a rounded tip on a line.

In the illustrated example, the Manhattan features 4, 6 and 9 each define discrete or non-adjoining Manhattan features, meaning that they are separated or spaced apart from any other Manhattan and non-Manhattan features of the layout 1. The other Manhattan features 8a, 8b, 8c, 10a, 10c, 12a, 12c, 14a, 14c, 14e, 14g, 16a and 18b each adjoin at least one other Manhattan or non-Manhattan features and are accordingly comprised in a composite feature.

Further, each non-Manhattan feature 10b, 12b, 14b, 14d, 14f, 16b, 16c, 18a and 18c adjoin at least one other Manhattan or non-Manhattan feature and are accordingly comprised in a composite feature.

An example of a composite feature is a first Manhattan feature (e.g., first line) extending in the first Manhattan direction and an adjoining second Manhattan feature (e.g., second line) extending in the second Manhattan direction. The composite feature 8 is an example of such a composite feature formed exclusively of Manhattan features, namely the first type of Manhattan features 8a, 8c and the second type of Manhattan feature 8b. This type of composite feature may be denoted as a Manhattan type composite feature, or a polygonal composite feature.

A further example of a composite feature is a Manhattan feature (e.g., line) and non-Manhattan feature adjoining (i.e., connecting to) the Manhattan feature. The non-Manhattan feature may be a curvilinear feature (i.e., the first non-Manhattan type). An example of such a composite feature is the composite feature 10 formed of the first type of Manhattan features 10a, 10c and the curvilinear feature 10b. Further examples include the composite features 12 and 14. The non-Manhattan feature of a composite feature may also be a round tip feature (i.e., the second non-Manhattan type). An example of such a composite feature is the composite feature 16 formed of the first type of Manhattan feature 16a and the non-Manhattan features 16b, 16c, defining rounded tips on the Manhattan feature16a. A further example is the composite feature 18 formed of the first type of Manhattan feature 18b and the non-Manhattan features 18a, 18c defining rounded tips on the Manhattan feature 18b.

While not present in the illustrated example, a composite feature may in principle also be formed exclusively of non-Manhattan features, such as a line-shaped non-Manhattan feature with one or more rounded tips. However, it is contemplated that when a portion of a feature already is identified as a non-Manhattan feature, further partitioning of the non-Manhattan feature into two or more sub-non-Manhattan features may not be necessary, in view of the aim to avoid false errors during DRC. Hence, in the following, it will be assumed that rounded tips only will be present on Manhattan features. Alternatively, if the layout comprises a curvilinear non-Manhattan feature with a rounded tip, these will not be separately identified, but the curvilinear non-Manhattan feature with the rounded tip will be considered as a single same curvilinear non-Manhattan feature. Further, while each non-Manhattan feature in the illustrated example is comprised in a composite feature, it is also possible for a non-Manhattan feature to define a discrete or non-adjoining non-Manhattan feature.

In the illustrated example, the first Manhattan direction X defines a preferred direction or orientation of the layout 1. Accordingly, features of the layout 1 may be defined with a tighter CD or CDs as measured along the second Manhattan direction Y, relative as measured along the first Manhattan direction X.

In the illustrated example, this may be seen by the narrower minimum line width of Manhattan features of the first type, and the narrower line-to-line spacing between spaced apart Manhattan features of the first type. A minimum line width M1.W and a minimum line-to-line spacing M1.S are indicated for a few of the Manhattan features of the first Manhattan type 14e, 16a and 18b in Fig. 1b. A minimum line width M2.W and a minimum line-to-line spacing M2.S are indicated for the Manhattan features of the second Manhattan type 8b and 9 in Fig. 1b. As may be seen, the minimum line width M1.W is smaller than the corresponding minimum line width M2.W. Additionally, the minimum line-to-line spacing M1.S is smaller than the corresponding minimum line-to-line spacing M2.S.

As further shown in Fig. 1b, the non-Manhattan features are associated with a corresponding set of CDs, e.g., a minimum feature width (e.g., line width) M3.W as indicated for the curvilinear non-Manhattan feature 14f, and a minimum feature spacing M3.S as indicated between the non-Manhattan features 14f and 18c.

Fig. 1b indicates further non-limiting examples of metrics involving non-Manhattan features, that may be relevant to consider during DRC: a minimum feature spacing M4.S between a non-Manhattan feature and a Manhattan feature along the second Manhattan direction Y (see features 14f and 16a, and features 18a and 10c); and a minimum feature spacing M5.S between a non-Manhattan feature and a Manhattan feature along the first Manhattan direction X (see features 16c and 8b).

Since the first Manhattan direction X is a preferred direction, and since the non-Manhattan features 14f, 18a, 18c are angled, or comprise edges which are angled, with respect to the preferred first Manhattan direction X, it will during fabrication not be possible achieve as small CDs for the non-Manhattan features as for the first type of Manhattan features. Accordingly, the minimum line width M3.W and the minimum feature spacing M3.S for the non-Manhattan features may each be greater than the corresponding minimum line width M1.W and the corresponding minimum feature spacing M1.S for the first type of Manhattan features. Depending on implementation, the minimum feature spacing M3.S may be either greater or smaller than the minimum feature spacing M2.S. This applies correspondingly to the second minimum feature width M3.W and the third minimum feature width M2.W. For corresponding reasons, the further metrics M4.S and M5.S S may also differ from M1.S and M2. S.

Therefore, in case the layout 1 as shown in Fig. 1a would be subjected to DRC using a set of conventional design rules, comprising design rule checks of the minimum line width M1.W and the minimum feature spacing M1.S for the first type of Manhattan features, multiple false DRC errors would result due to the presence of the non-Manhattan features. Conversely, adjusting the values of the design rules to encompass the larger CD associated with the non-Manhattan features (e.g., setting M1.W equal to M3.W and M1.S equal to M3.S) could avoid at least some DRC errors associated with the non-Manhattan features, but instead trigger false DRC errors in relation to the first type of Manhattan features, as they by virtue of being oriented in the preferred direction X, may be defined with a smaller CD or CDs. It is here to be noted that in each of these example scenarios, the DRC errors mentioned would be "false" in the sense that these features of the layout 1 still would be within the lithographic constraints of the subsequent device fabrication.

A further note regarding non-Manhattan features of the second / round tip type is that they have a line width which is not unambiguously defined. Hence, including for example the round tip 18a in a DRC involving the minimum line width M1.W would trigger a false DRC error for the feature 18 if the line width was measured at the round tip 18a.

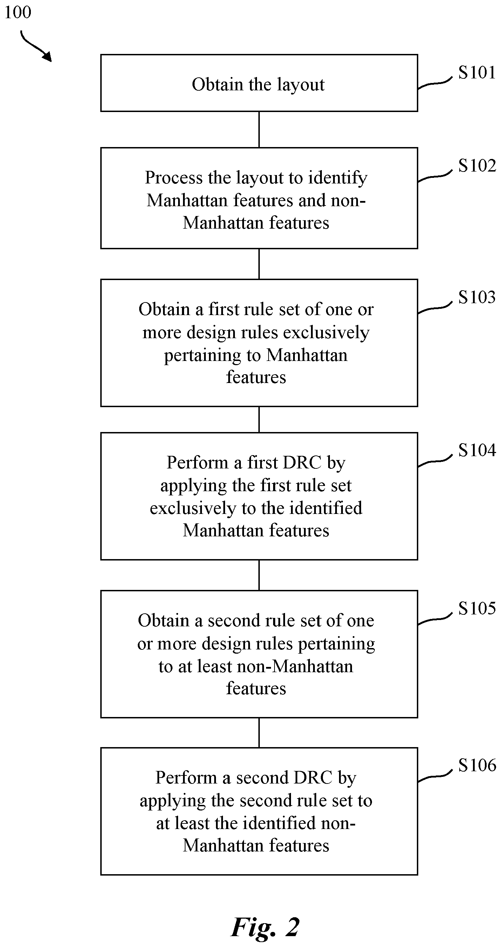

A method 100 for DRC of a layout comprising a combination of Manhattan features and non-Manhattan features, such as the layout 1, will in the following be described with reference to the flow chart of Fig. 2.

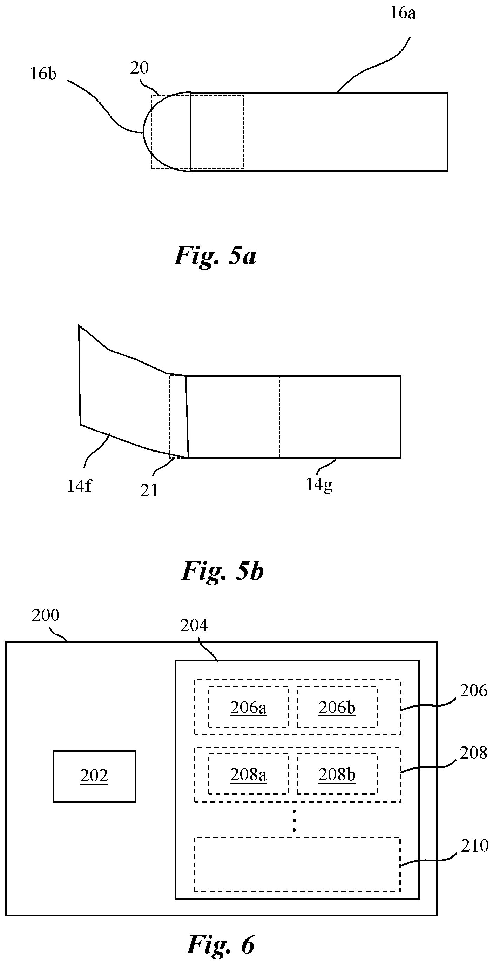

The method 100 may be implemented by a computing device, such as the computing device 200 of the schematic shown block diagram of Fig. 6. The computing device 200 may comprise processing circuitry configured to implement the method. The computing device 200 may for instance comprise one or more processors 202 and the operations of the method may be implemented using software instructions which may be stored on a computer readable media or memory 204 (e.g. on a non-transitory computer readable storage medium, volatile or non-volatile) to be executed by the one or more processors 202 of the computing device 200. The computing device 200 may for example be a personal computer (e.g. a laptop or desktop computer). The method 200 may be comprised in a software for a computer-aided design flow, such as in an EDA tool. While not expressly shown in Fig. 6, the computing device 200 may comprise or be connected to a monitor and one or more input peripherals (e.g., a keyboard, a mouse, or the like) such that a user may display and interact with a user interface of the EDA tool.

As will be further disclosed in the following, the method 100 is in part based on selectively applying a first rule set of one or more design rules exclusively pertaining to Manhattan features, and a second rule set of one or more design rules pertaining to at least non-Manhattan features. The first and second rule sets may as shown in Fig. 6 be stored as respective rule sets 206, 208 (optionally along with one or more additional rule sets 210) in the memory 204.

At S101, the layout 1 is obtained. The layout 1 may be generated using one or more of placement and routing functions of the EDA tool. The layout 1 may for example be generated automatically based on a layout of an underlying layer of the IC design (e.g., an active layer, a local interconnect layer, a lower metal layer, etc.), and/or other design requirements supplied to the EDA tool by an operator (e.g., a circuit designer) of the EDA tool. The layout 1 may additionally or alternatively be manually designed by the operator of the EDA tool manually placing and routing the Manhattan and non-Manhattan features of the layout 1. In either case, the layout 1 may by way of example be generated at a design house and (once the layouts of all device levels of the IC device have been finalized) be delivered to a mask house where the layouts may be used to fabricate corresponding masks, which in turn are to be provided to a semiconductor fab for fabrication of the IC device. Accordingly, as may be appreciated, the method 100 is concerned with the DRC of the layout at the design phase and not with any DRC of a corresponding mask (e.g., as generated at the mask house).

At S102, the layout 1 is processed to identify the Manhattan features (e.g., 4, 6, 8a, 8b, 8c, 9, 10a, 10c, 12a, 12c, 14a, 14c, 14e, 14g, 16a and 18b) and the non-Manhattan features (e.g., 10b, 12b, 14b, 14d, 14f, 16b, 16c, 18a and 18c) in the layout 1. By this step, the layout 1 may accordingly be partitioned or decomposed into its Manhattan parts (see Fig. 3) and non-Manhattan parts (see Fig. 4).

The Manhattan and non-Manhattan features may for example be distinguished from one another by first extracting rectangle-shaped features (i.e., shapes) in the layout 1 oriented in either the first or second Manhattan directions X, Y. These shapes may be identified as the Manhattan features. Secondly, the non-Manhattan features may be identified by subtracting the identified Manhattan features from the set of all features identified in the layout 1. These will accordingly be features having edges which are not oriented in the first or second Manhattan directions X, Y. As discussed above, Manhattan as well as non-Manhattan features may be identified (i.e., extracted) from composite features.

The identification of Manhattan shapes may be implemented in various manners. Discrete Manhattan features may be readily identified by identifying closed rectangular shapes in the layout. Composite features of Manhattan and non-Manhattan features may require additional processing.

For example, features with at least one pair of parallel and mutually facing edges (oriented in the first or second Manhattan direction X, Y) may be identified. Where the pair of edges are joined by a transversely oriented third edge (e.g., like feature 14a in Fig. 1a), a closed rectangle may be formed by joining the pair of edges by a further transversely oriented fourth edge. The closed rectangle may then be identified as a Manhattan shape. Where the pair of edges are not joined by a transversely oriented third edge (e.g., like feature 14e), a closed rectangle may be formed by joining the (first) pair of edges by a pair of further edges transversely oriented to the (first) pair of edges. In case the facing edges of the (first) pair are of different lengths, the joining edge(s) may be drawn starting from the free end(s) of the shorter of the pair. A remaining portion of the composite shape may be iteratively processed in a corresponding manner until no further Manhattan shapes can be identified in the remaining portion. The remaining portion may be identified as a non-Manhattan shape. In an optional extension of this approach, where two closed rectangles identified in a composite feature are arranged on a straight line (oriented in the first or second Manhattan direction X, Y) with an intermediate connecting portion of the composite feature, the two closed rectangles may be merged to define a common larger rectangle.

Once the Manhattan and non-Manhattan features in the layout 1 have been identified, each of the Manhattan shapes and the non-Manhattan features may further be subjected to a sub-classification.

The Manhattan shapes may be sub-classified into the first type of Manhattan features and the second type of Manhattan features. Examples of Manhattan features of the first type in the layout 1 include features 4, 6, 8a, 10a, 10c, etc. Examples of Manhattan features of the second type in the layout 1 include features 8b and 9. This sub-classification may be implemented by determining the orientation of the longer pair of edges of each Manhattan shape. That is, the Manhattan features with their direction of elongation oriented in the first Manhattan direction X are identified as Manhattan features of the first type. Conversely, the Manhattan features with their direction of elongation oriented in the second Manhattan direction Y are identified as Manhattan features of the second type.

The non-Manhattan features may be sub-classified into the first type of non-Manhattan features (curvilinear) and the second type of non-Manhattan features (round tip). Examples of non-Manhattan features of the curvilinear type in the layout 1 include features 10b, 12b, 14d and 14f. Examples of non-Manhattan features of the round tip type include features 16b, 16c, 18a, 18c.

The identification of the round tip non-Manhattan features may be implemented by comparing the area of each identified non-Manhattan feature to a threshold area and determining only non-Manhattan features with an area below the threshold area as round tip non-Manhattan features. For instance, the rounded tips may be assumed to be shaped as half circles, wherein the threshold area may be set to be approximately equal to the area of a half circle with a diameter equal to the minimum line width of the first type of Manhattan features (e.g., M1.W), or of the curvilinear non-Manhattan features (e.g., M3.W). If a slightly more inclusive identification is desired the threshold area may be set to be slightly greater (e.g., by a factor in a range from 1.1 to 2.0, as a non-limiting example) than the area of the half circle.

Having identified the round tip non-Manhattan features, the curvilinear non-Manhattan features may be identified by subtracting the identified round tip non-Manhattan features from the set of all non-Manhattan features identified in the layout 1.

Since commercially available EDA tools typically comprise built-in functions for identifying orientations of edges, and determining the area of features in a layout, the implementations presented above may be readily implemented using existing tools. However, the implementations are merely examples, and it is contemplated that the method 100 more generally may use any function, procedure or algorithm allowing different types of shapes and sizes to be determined. For instance, the feature identification may be realized using machine learning-based approaches. A model (e.g., a machine learning model, such as a neural network based on computer vision) may be trained to identify (i.e., "predict") Manhattan and non-Manhattan features in a layout. The training of the model may use a training data set of layouts with manually labelled Manhattan and non-Manhattan features as ground truth.

At S103, the method 100 obtains the first rule set 206 of one or more design rules exclusively pertaining to Manhattan features. As mentioned above, the first rule set 206 may be obtained by the processing device 202 from the memory 204. The first rule set 206 may form part of a DRC rule set for Manhattan type features of a metal layer (e.g., of an interconnect level to which the layout 1 pertains).

At S104, a first DRC is performed by applying the first rule set 206 exclusively to the identified Manhattan features in the layout 1. Hence, the first rule set 206 is applied to the Manhattan features shown in Fig. 3, thus ignoring any non-Manhattan features in the layout 1, i.e. the non-Manhattan features shown in Fig. 4.

At S105, the method 100 obtains the second rule set 208 of one or more design rules pertaining to at least non-Manhattan features. The second rule set 208 may like the first rule set 206 be obtained by the processing device from the memory 204.

At S106, a second DRC is performed by applying the second rule set 208 to at least the identified non-Manhattan features in the layout 1. Hence, it may be ensured that identified non-Manhattan features, and any relationship between non-Manhattan features and Manhattan or non-Manhattan features in the layout 1 conforms with a set of design rules purposefully adapted to any lithographic constraints associated with the non-Manhattan features.

The first rule set 206 (i.e., the Manhattan feature exclusive rule set) may as shown in Fig. 6 comprise a first subset of design rules 206a and a second subset of design rules 206b. The first subset of design rules 206a may comprise design rules related to the first type of Manhattan features, and hence be associated with or based on one or more CDs as measured along the second Manhattan direction Y. The second subset of design rules 206b may comprise design rules related to the second type of Manhattan features, and hence be associated with or based on one or more CDs as measured along the first Manhattan direction Y.

Hence, when performing the first DRC (i.e., at S104), the first subset of design rules 206a may be applied to the identified Manhattan features of the first type in the layout 1 (e.g., features 4, 6, 8a, 10a, 10c, etc.). The second subset of design rules 206b may be applied to Manhattan features of the second type identified in the layout 1 (e.g., features 8b and 9).

The first rule set 206 may comprise a first minimum Manhattan feature spacing design rule defining a minimum feature spacing M1.S (as shown in Fig. 1b) between Manhattan features, as measured along the second Manhattan direction Y. Applying this rule means checking that the minimum feature spacing between Manhattan features, as measured along the second Manhattan direction Y, is not less than M1. S, in particular between Manhattan features of the first type. The first minimum Manhattan feature spacing design rule may be comprised in the first subset of design rules 206a.

The first rule set 206 may further comprise a corresponding second minimum Manhattan feature spacing design rule defining a corresponding minimum feature spacing M2.S (as shown in Fig. 1b) of Manhattan features, as measured along the first Manhattan direction X. Applying this rule means checking that the minimum feature spacing between Manhattan features, as measured along the first Manhattan direction X, is not less than M2.S, in particular between Manhattan features of the second type. The second minimum Manhattan feature spacing design rule may be comprised in the second subset of design rules 206b.

Hence, in performing the first DRC, the first minimum feature spacing design rule may be applied (exclusively) to spaced apart Manhattan features of the first type (e.g., features 14e, 16a, 18b), and the second minimum feature spacing design rule may be applied (exclusively) to spaced apart Manhattan features of the second type (e.g., features 8b and 9).

The first rule set 206 may additionally or alternatively comprise a first minimum Manhattan feature width design rule defining a minimum feature width M1.W (as shown in Fig. 1b) of Manhattan features, as measured along the second Manhattan direction Y. Applying this rule means checking that the minimum feature width of Manhattan features, as measured along the second Manhattan direction Y, is not less than M1.W, in particular for Manhattan features of the first type. The first minimum Manhattan feature spacing design rule may be comprised in the first subset of design rules 206a.

The first rule set 206 may additionally or alternatively comprise a second minimum Manhattan feature width design rule defining a minimum feature width M2.W (as shown in Fig. 1b) of Manhattan features, as measured along the first Manhattan direction X. Applying this rule means checking that the minimum feature width of Manhattan features, as measured along the first Manhattan direction X, is not less than M2.W, in particular for Manhattan features of the second type. The second minimum Manhattan feature spacing design rule may be comprised in the second subset of design rules 206b.

Hence, in performing the first DC, the first minimum feature width design rule may be applied (exclusively) to Manhattan features of the first type (e.g., features 14e, 16a, 18b), and the third minimum feature width design rule may be applied (exclusively) to Manhattan features of the second type (e.g., features 8b and 9).

While some of the design rules of the first set 206, such as the minimum feature width rules (M1.W and M2.W), are applied on a feature-by-feature basis, some design rules, such as the minimum feature spacing design rules (M1.S and M2.S), are applied to relationships between features. As outlined above, the first DRC may thus comprise applying the first minimum Manhattan feature spacing design rules exclusively to the first type of Manhattan features and the second minimum Manhattan feature spacing design rule exclusively to the second type of Manhattan features.

The second rule set 208 may generally comprise one or more design rules corresponding to the design rule(s) of the first rule set 206 but relating to the non-Manhattan features.

The second rule set 208 may comprise a first minimum non-Manhattan feature spacing design rule defining a minimum feature spacing M3.S (as shown in Fig. 1b) between spaced apart non-Manhattan features.

The non-Manhattan features may here be any non-Manhattan features identified in the layout 1. Applying this rule thus means checking that the minimum feature spacing of non-Manhattan features is not less than M3.S. As the edges of non-Manhattan features may have any orientation, the first minimum non-Manhattan feature spacing design rule may be checked for any orientation. For example, applying the first minimum non-Manhattan feature spacing design rule to a pair of features, such as the non-Manhattan features 18c and 14f may comprise checking that the distance between any points along the respective edges of the non-Manhattan features 18a and 14f does not fall below the minimum feature spacing M3.S of the first minimum non-Manhattan feature spacing design rule.

The second rule set 208 may further comprise one or more further minimum non-Manhattan feature spacing design rules (which may commonly be referred to as "second minimum non-Manhattan feature spacing design rules") defining a minimum feature spacing between spaced apart non-Manhattan and Manhattan features.

The second rule set 208 may comprise a respective second minimum non-Manhattan feature spacing design rule for each type of Manhattan feature. Where the method 100 comprises a sub-classification of non-Manhattan features identified in the layout 1 into curvilinear and round tip features, the second minimum non-Manhattan feature spacing design rules may further be defined for each type of non-Manhattan feature.

The second rule set 208 may comprise a minimum non-Manhattan feature spacing design rule defining a minimum feature spacing M4.S (as shown in Fig. 1b) between a spaced apart non-Manhattan feature (of a curvilinear or round tip type) and a Manhattan feature (of the first or second type), as seen along the second Manhattan direction Y. Applying this rule means checking that the minimum feature spacing between non-Manhattan and Manhattan features, as measured along the second Manhattan direction Y, is not less than M4.S.

The second rule set 208 may comprise a minimum non-Manhattan feature spacing design rule defining a minimum feature spacing M5.S (as shown in Fig. 1b) between a spaced apart non-Manhattan feature (of a curvilinear or round tip type) and a Manhattan feature (of the first or second type), as seen along the first Manhattan direction X. Applying this rule means checking that the minimum feature spacing between non-Manhattan and Manhattan features, as measured along the first Manhattan direction X, is not less than M5.S. Hence, when performing the second DRC (i.e., at S106), the first minimum non-Manhattan feature spacing design rule may be applied to spaced apart non-Manhattan features (e.g., features 14f and 18c), and each second minimum non-Manhattan feature spacing design rules may be applied to spaced apart non-Manhattan and Manhattan features (e.g., features 16c and 8b, 14f and 16a, and 18a and 10c) associated with each design rule.

The second rule set 208 may additionally or alternatively comprise a minimum non-Manhattan feature width design rule defining a minimum feature width M3.W (as shown in Fig. 1b) of non-Manhattan features. Applying this rule means checking that the minimum feature width of non-Manhattan features is not less than M3.W. The minimum feature width M3.W may thus define the minimum width of non-Manhattan features.

As discussed above, the method 100 may comprise a sub-classification of non-Manhattan features identified in the layout 1, into curvilinear and round tip features.

As may be understood from the above discussion, some types of design rules may be relevant to apply to both curvilinear and round tip features. Such design rules may be applied to both curvilinear and round tip features. For example, the second minimum feature spacing design rules may be applied to check a minimum spacing between curvilinear or round tip features and a Manhattan feature in the first or second Manhattan direction X, Y.

In contrast, some design rules may be relevant to apply to only one of curvilinear features and round tip features. Accordingly, the second rule set 208 may comprise a third subset of design rules 208a of at least one non-Manhattan design rule related to the first type of non-Manhattan features but not the second type of non-Manhattan features, and a fourth subset of design rules 208b of at least one non-Manhattan design rule related to the second type of non-Manhattan features but not the first type of non-Manhattan feature.

The minimum non-Manhattan feature width design rule (M3.W) is an example of a non-Manhattan design rule related to curvilinear features but not the round tip features.

An example of a minimum non-Manhattan feature width design rule related to the round tip features but not the curvilinear features is a curvature metric design rule defining a target curvature metric for round tip features. The target curvature metric may for example define a minimum radius of curvature for round tip type features. Hence, when performing the second DRC (i.e., at S106), the minimum non-Manhattan feature width design rule may be applied to curvilinear features identified in the layout 1 but not to round tip features, and the curvature metric design rule may be applied to round-tip features but not curvilinear features.

As mentioned above, where a layout comprises composite features comprising adjoining Manhattan and non-Manhattan features (such as features 10 and 14 of layout 1), decomposition of the composite features into its constituent Manhattan and non-Manhattan feature parts may in some cases result in an isolated non-Manhattan feature with a portion with a non-manufacturable shape. An example of a non-manufacturable shape which may be created when decomposing adjoining non-Manhattan and Manhattan features is a pointy portion, i.e., a corner with edges joining at a sharp / acute angle. An example may be seen in Fig. 4 where the non-Manhattan feature 14b comprises a pointy portion 14ba adjoining the Manhattan feature 14a (visible in Fig. 1a and 3).

If a minimum feature width design rule is applied to the layout 1 as shown in Fig. 4 (which excludes the Manhattan features), the portion 14ba of the non-Manhattan feature 14b may trigger a false DRC error. The DRC error may be considered as false since the portion 14ba does not correspond to an actual feature existing in isolation in the layout 1, but is created as a result of the decomposition (i.e., excluding the Manhattan features). As discussed above, design rule check of the width of round tip features is typically not meaningful and hence only curvilinear non-Manhattan features will be considered in the following.

Accordingly, the method 100 (e.g., in step S102) may optionally be extended with further identifying in the layout 1 composite features comprising adjoining Manhattan and curvilinear non-Manhattan features. Such composite Manhattan-and-curvilinear features may for example be identified by, subsequent to identifying the Manhattan features and curvilinear features in the layout 1, identifying which of the identified curvilinear features adjoin at least one identified Manhattan feature.

The second rule set 208 (obtained at step S 106) may further be supplemented with at least one design rule related to composite Manhattan-and-curvilinear features. In view of the example of the pointy portion 14ba, an example of such "composite feature design rule" that may be useful is a composite feature width design rule defining a respective minimum feature width for each one of a Manhattan feature and a curvilinear feature of a composite feature. Thereby, a minimum Manhattan feature width of the composite feature width design rule may be applied to Manhattan features of the composite feature and a minimum non-Manhattan feature width of the composite feature width design rule may be applied to curvilinear features of the composite feature.

The composite width feature design rule may define a first minimum Manhattan feature width for the first type of Manhattan feature (M1.W) and a second minimum Manhattan feature width (M2.W) for the second type of Manhattan feature. Further, the composite feature width design rule may define a minimum curvilinear feature width (e.g., M3.W) for curvilinear features.

The composite feature width design rule may be comprised in the second rule set 208. The composite feature width design rule may be applied to composite features identified in the layout 1 as part of the second DRC (step S106). Applying the composite feature width design rule to an identified composite feature in the layout 1 may comprise testing any first type Manhattan feature of the composite feature against M1.W, any second type Manhattan feature against M2.W of the composite feature, and any curvilinear feature of the composite feature against M3.W.

Where the composite feature width design rule is used, a minimum non-Manhattan feature width design rule check of non-Manhattan features in isolation may be omitted. Hence, with reference to the previous discussion, the minimum non-Manhattan feature width design rule defining the minimum feature width M3.W may be omitted from the second rule set 208 and the second DRC and replaced by the composite feature width design rule.

According to an alternative approach, the minimum non-Manhattan feature width design rule defining M3.W of the second rule set 208 may during the second DRC (step S106) be applied to identified composite features in the layout 1, i.e., to any curvilinear feature and any Manhattan feature of each identified composite feature. As may be appreciated this would on its own result in DRC errors for the Manhattan features, in particular of the first type of Manhattan features, since M1.W is smaller than M3.W. Therefore, to avoid reporting these (false) DRC errors, the method 100 may comprise discarding any DRC errors resulting at any Manhattan feature(s) of a composite feature when applying the minimum non-Manhattan feature width design rule. Since the Manhattan features have been identified in step S102, this may be implemented in a straight-forward manner by checking, for each DRC error for the composite feature, whether the DRC error occurred at a Manhattan feature, and in that case discard or ignore the DRC error as false.

It is to be noted that this does not mean that the Manhattan features of composite features are not subjected to minimum width check rules, since the minimum width of the Manhattan features may be checked by the first and second minimum Manhattan feature width design rules M1.W, M2.W during the first DRC (step S104).

In the above, various examples of design rules related to non-Manhattan features, and in some instances both non-Manhattan features and Manhattan features, have been discussed. However, the presence of non-Manhattan features may also motivate specifically adapted DRC related to the relationship between vias and non-Manhattan features.

In Fig. 1a, via locations are schematically indicated by dashed line rectangular regions at least partially enclosed by respective Manhattan or non-Manhattan features, for instance the individually numbered via locations 20, 21 and 22. The via location 22 shows an example of a via location enclosed by a Manhattan feature 4. The via location 22 is located close to a (non-rounded) line tip of the Manhattan feature 4. During device fabrication, there is a risk that process variability, such as overlay errors, causes the finally produced feature pattern to deviate from the intended design. Among others, process variability may cause a displacement or shift of the line tip of the Manhattan feature 4 along the X direction, relative the via location 22, such that a reduced enclosure between the Manhattan feature 4 and the via at the via location 22 results. A reduced enclosure implies a reduced overlap or contact interface and may hence potentially degrade device performance by increasing the overall interconnect resistance. Including a minimum via enclosure rule in the DRC for Manhattan features may ensure that the layout 1 uses a minimum via enclosure which provides a sufficient tolerance to such process variability.

However, since non-Manhattan features deviate from the rectangular Manhattan shape, applying a conventional minimum enclosure rule to a via and a non-Manhattan feature enclosing the via may result in false DRC errors.

Fig. 5a illustrates by way of example an enlarged view of the via location 20 being partially enclosed by the round tip non-Manhattan feature 16b. Despite the tip having a sufficient enclosure along the first Manhattan direction X, the rounded curvature may cause a conventional Manhattan-type minimum enclosure rule to trigger a false DRC error.

Fig. 5b shows a corresponding enlarged view of the via location 21 being partially enclosed by the elongated curvilinear non-Manhattan feature 14f. Despite the enclosure along the X direction clearly being sufficient, the non-enclosed part of the via enclosure may cause a conventional Manhattan-type minimum enclosure rule to trigger a false DRC error.

By excluding the non-Manhattan features from the first DRC using the first rule set 208, and providing the second rule set 208 with a purposefully adapted minimum via enclosure rule for non-Manhattan features, such false DRC errors may be avoided or mitigated.

Therefore, the processing at S 102 of the method 100, may further comprise identifying vias locations (e.g., via locations 20, 21) in the layout and the non-Manhattan features (e.g., features 16b, 14f) at least partly enclosing each identified via location. The second rule set 208 may further comprises a minimum enclosure rule defining a minimum via enclosure between a via location and a non-Manhattan feature. Hence, in performing the second DRC, the minimum enclosure rule may be applied to each identified via location 20, 21 and the identified non-Manhattan feature 16b, 14f enclosing the identified via 20, 21. One straightforward example of such a minimum enclosure rule is defining the minimum enclosure for vias overlapping a non-Manhattan feature to a fraction of a minimum enclosure of minimum enclosure rule for vias overlapped (only) by Manhattan features. For example, denoting the minimum enclosure of a minimum enclosure rule for vias overlapped (only) by Manhattan features E_{min,Manhattan}, the minimum enclosure for vias overlapping a non-Manhattan feature E_{min,NonManhattan} may be set to E_{min,NonManhattan} = E_{min,Manhattan} * R, where R is in a range from 0.7-0.9, as a non-limiting example.

The person skilled in the art realizes that the present invention by no means is limited to the examples described above. On the contrary, many modifications and variations are possible within the scope of the appended claims.

## Claims

1. A computer-implemented method for design rule check, DRC, of a layout (1) of an integrated circuit design, the layout (1) comprising a combination of Manhattan features (4, 6) and non-Manhattan features (10a, 12b), the method comprising:
obtaining (S101) the layout (1);
processing (S102) the layout to identify Manhattan features (4, 6) and non-Manhattan features (10a, 12b) in the layout (1);
obtaining (S103) a first rule set (206) of one or more design rules exclusively pertaining to Manhattan features;
performing (S104) a first DRC by applying the first rule set (206) exclusively to the identified Manhattan features (6) in the layout (1);
obtaining (S105) a second rule set (208) of one or more design rules pertaining to at least non-Manhattan features;
performing (S106) a second DRC by applying the second rule set (208) to at least the identified non-Manhattan features (10a, 12b) in the layout (1).

2. The method according to claim 1,
wherein the first rule set (206) comprises a first subset of design rules (206a) related to a first type of Manhattan features extending in a first Manhattan direction (X), and a second subset of design rules (206b) related to a second type of Manhattan features extending in a second Manhattan direction (Y), and
wherein in performing the first DRC, the first subset of design rules (206a) is applied to Manhattan features of the first type identified in the layout (1), and the second subset of design rules (206b) is applied to Manhattan features of the second type identified in the layout (1).

3. The method according to claim 2, wherein the first Manhattan direction (X) is a preferred direction.

4. The method according to any one of the preceding claims,
wherein the first rule set (206) comprises a first minimum Manhattan feature spacing design rule defining a minimum feature spacing between spaced apart Manhattan features,
wherein the second rule set (208) comprises a first minimum non-Manhattan feature spacing design rule defining a minimum feature spacing between spaced apart non-Manhattan features, and/or a second minimum non-Manhattan feature spacing design rule defining a minimum feature spacing between spaced apart non-Manhattan and Manhattan features,
wherein in performing the first DRC, the first minimum Manhattan feature spacing design rule is applied to spaced apart Manhattan features (14e, 16a, 18b) identified in the layout (1), and
wherein in performing the second DRC, the first minimum non-Manhattan feature spacing design rule is applied to spaced apart non-Manhattan features (14f, 18c) and/or the second minimum non-Manhattan feature spacing design rule is applied to spaced apart non-Manhattan and Manhattan features (18a, 10c) identified in the layout (1).

5. The method according to claim 4, when dependent on claim 2,
wherein the first minimum Manhattan feature spacing design rule is comprised in the first subset (206a) of design rules of the first rule set (206) and defines a minimum feature spacing between Manhattan features spaced apart along the second Manhattan direction,
wherein the second subset of design rules (206b) of the first rule set (206) comprises a second minimum Manhattan feature spacing design rule defining a minimum feature spacing between Manhattan features spaced apart along the first Manhattan direction, and
wherein in performing the first DRC, the first minimum Manhattan feature spacing design rule is applied to spaced apart Manhattan features of the first type (14e, 16a, 18b), and the second minimum Manhattan feature spacing design rule is applied to spaced apart Manhattan features (8b, 9) of the second type.

6. The method according to claim 5, wherein the minimum feature spacing of the first and/or second non-Manhattan feature spacing design rules is different from the minimum feature spacings of the first and second minimum Manhattan feature spacing design rules, and, when dependent on claim 3, greater than the minimum feature spacing of the first minimum Manhattan feature spacing design rule.

7. The method according to any one of the preceding claims,
wherein the first rule set (206) comprises a first minimum Manhattan feature width design rule defining a minimum feature width of Manhattan features,
wherein the second rule set (208) comprises a minimum non-Manhattan feature width design rule defining a minimum feature width of non-Manhattan features,
wherein in performing the first DRC, the first minimum Manhattan feature width design rule is applied to Manhattan features (14e, 16a, 18b) identified in the layout (1), and
wherein in performing the second DRC, the minimum non-Manhattan feature width design rule is applied to non-Manhattan features (14f) identified in the layout (1).

8. The method according to claim 7, when dependent on claim 2,
wherein the first minimum Manhattan feature width design rule is comprised in the first subset of design rules (206a) of the first rule set (206) and defines the minimum feature width of Manhattan features of the first type,
wherein the second subset of design rules (206b) of the first rule set (206) comprises a second minimum Manhattan feature width design rule defining a minimum feature width of Manhattan features of the second type, and
wherein in performing the first DRC, the first minimum Manhattan feature width design rule is applied to Manhattan features of the first type (14e, 16a, 18b), and the second minimum Manhattan feature width design rule is applied to Manhattan features of the second type (8b, 9).

9. The method according to claim 8, wherein the minimum feature width of the non-Manhattan feature width design rule is different from the minimum feature widths of the first and second minimum Manhattan feature width design rules, and, when dependent on claim 3, greater than the minimum feature width of the first minimum Manhattan feature width design rule.

10. The method according to any one of the preceding claims, wherein the processing comprises first identifying Manhattan features (4, 6) in the layout (1) and subsequently identifying non-Manhattan features (10a, 12b) in the layout (1) as features in the layout (1) not being Manhattan features (4, 6).

11. The method according to any one of the preceding claims, wherein the processing further comprises identifying, among the non-Manhattan features identified in the layout (1), features of a first non-Manhattan type and a second non-Manhattan type, wherein features of the second non-Manhattan type are of a round tip type (16b, 18a, 18c) and features of the first non-Manhattan type are features not identified as the second non-Manhattan type (10b, 12b), and
wherein the second rule set (208) comprises at least one non-Manhattan design rule related to the first type of non-Manhattan features but not the second type of non-Manhattan features, and at least one non-Manhattan design rule related to the second type of non-Manhattan features but not the first type of non-Manhattan feature.

12. The method according to claim 11, when dependent on claim 7,
wherein the at least one non-Manhattan design rule related to the first type of non-Manhattan features but not the second type of non-Manhattan features comprises the minimum non-Manhattan feature width design rule, and
wherein the at least one non-Manhattan design rule related to the second type of non-Manhattan features but not the first type of non-Manhattan feature comprises a curvature metric.

13. The method according to any one of the preceding claims, wherein the processing further comprises identifying via locations (20, 21) in the layout and non-Manhattan features (16b, 14f) at least partly enclosing each identified via location (20, 21), wherein the second rule set (208) further comprises a minimum enclosure rule defining a minimum via enclosure between a via location and a non-Manhattan feature, and wherein in performing the second DRC, the minimum enclosure rule is applied to each identified via location (20, 21) and the identified non-Manhattan feature (16b, 14f) enclosing the identified via location (20, 21).

14. The method according to any one of the preceding claims, further comprising identifying in the layout (1) composite features (14) comprising adjoining Manhattan and non-Manhattan features (14a-g),
wherein the second rule set (208) comprises at least one design rule related to composite features comprising adjoining Manhattan and non-Manhattan features, and
wherein in performing the second DRC, the at least one design rule related to composite features is applied to the composite features identified in the layout (1).

15. A computer program product comprising computer program code portions configured to perform a method for DRC of a layout of an integrated circuit design, in accordance with any one of the preceding claims, when executed by a processing device (202).
